# EUROPÄISCHE PATENTSCHRIFT

(11) **EP 0 846 486 B1**
(45) Veröffentlichungstag und Bekanntmachung des Hinweises auf die Patenterteilung: **27.09.2000**
(21) Anmeldenummer: 97120514.1
(22) Anmeldetag: 22.11.1997
(51) Int. Cl.: B01D 19/02, B01D 9/02, B01J 8/22

(54) **Verfahren zur Minderung oder Vermeidung einer Schaumbildung bei chemischen und physikalischen Stoffumwandlungsprozessen und Vorrichtung zu seiner Durchführung**
Process for reducing or avoiding foam generation in chemical or physical substance converting processes and device for its realization
Procédé pour réduire ou empêcher la génération de mousse dans des procédés de transformation chimique ou physique de substances et dispositif pour la réalisation

(30) Priorität: 07.12.1996 DE 19650959
(43) Veröffentlichungstag der Anmeldung: 10.06.1998
(73) Patentinhaber: Degussa-Hüls Aktiengesellschaft, 60287 Frankfurt am Main (DE)
(72) Erfinder: Schütte, Rüdiger, Dr., 60325 Frankfurt (DE); Ruhs, Alexander, Dr., 79618 Rheinfelden (DE); Pelgrims, Ivan, 2550 Kontich (BE)

(56) Entgegenhaltungen:
- EP-A- 0 452 164
- EP-A- 0 455 243
- DE-A- 2 539 797
- US-A- 4 111 829
- PATENT ABSTRACTS OF JAPAN vol. 10, no. 112, 25. April 1986 & JP 60 241902 A (MITSUI ZOSEN KK), 30. November 1985

## Beschreibung

Die Erfindung betrifft ein Verfahren zur Minderung oder Vermeidung einer Schaumbildung bei chemischen und physikalischen Stoffumwandlungsprozessen in einem flüssigen Medium, wobei die Stoffumwandlung in einem behälterförmigen Reaktor unter Durchmischung des Reaktorinhalts durchgeführt wird. Die Erfindung richtet sich ferner auf eine Vorrichtung zur Durchführung des Verfahrens.

Bei zahlreichen chemischen und physikalischen Stoffumwandlungsprozessen kommt es zu einer mehr oder weniger intensiven Schaumbildung, welche die Prozeßführung erschweren oder unmöglich machen. Daher sind gezielte Maßnahmen erforderlich, um den Schaum zu zerstören und/oder seine Bildung zu vermeiden oder zumindest auf ein akzeptables Maß zu mindern. Teilweise läßt sich Schaumbildung zwar durch die Strömungsführung in den Reaktoren, etwa durch Vermeidung scharfer Strömungsumlenkungen und Flüssigkeitszulauf unterhalb der Flüssigkeitsoberfläche, vermeiden oder vermindern, in vielen Fällen reichen derartige Maßnahmen aber nicht aus. Demgemäß müssen Verfahren zur Schaumzerstörung, darunter thermische, chemische und mechanische Verfahren, ergriffen werden - eine Übersicht vermitteln Pahl et al. in Chem.-Ing.-Tech. 67 (1995), 300-312. Durch die bekannten Maßnahmen zur Schaumzerstörung wird der technische Aufwand des betreffenden Verfahrens erhöht und/oder die Produktreinheit herzustellender Produkte durch den Einsatz chemischer Entschäumungsmittel gemindert; zusätzlich werden die Herstellkosten erhöht.

Zur Durchführung diskontinuierlicher und kontinuierlicher Kristallisationsverfahren, bei welchen es häufig durch intensive interne oder externe Umwälzung des die wachsenden Kristalle enthaltenden flüssigen Reaktionsmediums zu Schaumproblemen kommt, sind unterschiedliche Reaktoren bekannt - eine Übersicht vermittelt Ullmann's Encyclopedia of Industrial Chemistry, 5th ed. (1988) Vol. B2, 3-22 bis 3-25. Beispielsweise umfaßt ein Kristaller mit erzwungenem externen Umlauf einen Verdampferbehälter, eine Kreislaufleitung mit Pumpe und Wärmetauscher sowie eine Zufuhrleitung für die einzuspeisende Lösung und einen Entnahmestutzen für die Kristallsuspension. Über die Probleme einer Schaumbildung hinaus kommt es durch das mechanische Umwälzorgan zu sekundärer Keimbildung und dadurch zu einer zu feinen Produktqualität; im Wärmetauscher besteht zudem die Gefahr der Krustenbildung.

Vakuumkristaller mit einer internen Umwälzung der Kristallsuspension, etwa ein Swenson- oder Standard-Messo-Kristaller, enthalten ein im Behälter angeordnetes Leitrohr oder unterschiedlich geformte Leitbleche und ein Rührwerk. Es zeigte sich, daß es auch in derartigen Kristallern oft zur Schaumbildung kommt, was den Einsatz von Entschäumern oder speziellen Vorrichtungen zur Schaumzerstörung erforderlich macht. Auch hier kommt es zur Kornzerstörung durch mechanischen Energieeintrag über das Rührwerk und Umlenkungen an den Einbauten. Durch Reduzierung der Rührerdrehzahl wird zwar der Feinkornanteil verringert, jedoch kommt es zu Verkrustungen sowie zu Problemen infolge unzureichender Mischung. Derartige Probleme wurden in der Praxis bei der Herstellung von Natriumperborat gemäß dem in CAV 1973, Seiten 45-50 beschriebenen Verfahren beobachtet.

Nach der klassischen Kristallisationstheorie läßt sich zwar eine schlechte Kornzahlkontrolle in Kristallern der vorgenannten Art durch chemische Beeinflussung der Keimbildung oder durch Auflösen von Keimen oder durch konstruktive Trennung der Keimbildungs- und Kornwachstumsbereiche verbessern, jedoch sind derartige Maßnahmen mit einem zusätzlichen Aufwand verbunden. Von derartigen Maßnahmen macht zwar das Verfahren gemäß EP-B 0 452 164 bei der Herstellung von Natriumperborat Gebrauch. Das Schaumproblem wird nicht gelöst, in Abhängigkeit von der Auswahl der in diesem Verfahren eingesetzten oberflächenaktiven Stoff gegebenenfalls sogar verstärkt.

Die Aufgabe der Erfindung richtet sich demgemäß darauf, chemische und physikalische Stoffumwandlungsprozesse von in einer flüssigen Phase gelösten und/oder darin suspendierten Stoffen unter Durchmischung des Reaktorinhalts derart durchzuführen, daß es unter Einsatz einfacher technischer Mittel und unter Vermeidung oder Minimierung eines Zusatzes an Entschäumungsmitteln möglich ist, die Prozesse ohne nennenswertes Schaumproblem durchzuführen. Bei den erfindungsgemäß zu verbessernden physikalischen Stoffumwandlungsprozessen kann es sich beispielsweise um die Kristallisation handeln, wobei ein gelöster Stoff auskristallisiert wird. Bei chemischen Stoffumwandlungsprozessen kann es sich um beliebige chemische Umsetzungen handeln, insbesondere solche, welche in Gegenwart eines in einem flüssigen Medium suspendierten Feststoffs, etwa eines Feststoffkatalysators, durchgeführt werden oder in deren Verlauf ein Feststoff, etwa durch Umsetzung mit nachfolgender Kristallisation oder durch Polymerisation, gebildet wird.

Die hydrodynamischen Verhältnisse einer Suspension in einem Reaktor mit einem spitz zulaufenden Unterteil, beispielweise einem zylinderförmigen Behälter mit einem konischen Unterteil, der durch Gasinjektion mittels punkt- oder linienförmig an der Spitze angeordneter Düsen gerührt wird, wurde mehrfach untersucht - siehe R.H. Kleijntjens et al. in The Canadian J. of Chem. Engineering 72 (1994), 392-404 und Y.T. Shah et al. in Chem. Eng. Comm. 110 (1991), 53-70. In derartigen Reaktoren kommt es im Bereich des Blasenschleiers zu einer aufwärts gerichteten Strömung und im Bereich der Wandungen, parallel zu diesen, zu einer abwärtsgerichteten Rückströmung; im Bodenbereich des konischen Behälterteils ist die Feststoffkonzentration am höchsten. Die genannten Dokumente geben keine Anregung, derartige Auftriebsfreistrahlreaktoren zur Minderung einer bei einer Stoffumwandlung auftretenden Schaumentwicklung oder als Kristallisationsreaktor für die kontinuierliche Kristallisation zu verwenden. Eine solche Verwendung lag auch im Hinblick auf Ausführungen in Verfahrenstechnische Berechnungsmethoden, Teil 4 (1988), Kapitel 6, insbesondere Seiten 158-159, 167-169 und 206-209 nicht nahe, da dort (Seite 208) auf das Schaumproblem hingewiesen wird und zur Schaumbekämpfung die Verwendung chemischer Entschäumungsmittel empfohlen wird.

Gelöst wird die Aufgabe durch ein Verfahren zur Minderung oder Vermeidung einer Schaumbildung bei chemischen und physikalischen Stoffumwandlungsprozessen in einem flüssigen Medium, wobei die Stoffumwandlung in einem behälterförmigen Reaktor unter Durchmischung des Reaktorinhalts durchgeführt wird, das dadurch gekennzeichnet ist, daß man als Reaktor einen im wesentlichen von Einbauten freien, sich im unteren Teil verjüngenden und mit einer Vorrichtung zur Gasinjektion in einer eine Auftriebsfreistrahlumwälzung ermöglichenden Positionierung ausgestatteten Auftriebsfreistrahlreaktor verwendet und die Durchmischung des Reaktorinhalts durch Gasinjektion bewirkt.

Die Unteransprüche richten sich auf bevorzugte Ausführungsformen des Verfahrens.

Dem erfindungsgemäßen Verfahren, das diskontinuierlich oder kontinuierlich durchgeführt werden kann, sind beliebige chemische und physikalische Stoffumwandlungsprozesse zugänglich, bei deren Durchführung eine intensive Durchmischung von gelösten und/oder suspendierten, an einem Stoffumwandlungsprozeß teilnehmenden Stoffen in einem flüssigen Medium gefordert wird. Bei physikalischen Stoffumwandlungsprozessen handelt es sich insbesondere um die Überführung eines gelösten Stoffes in einen festen Stoff, also Kristallisationsprozesse, wobei sich das erfindungsgemäße Verfahren in besonderer Weise zur kontinuierlichen Kristallisation eignet. Bei chemischen Stoffumwandlungsprozessen kann es sich beispielsweise um die Bildung eines Reaktionsproduktes aus zwei oder mehr Edukten oder um eine Polymerisation handeln. Bei derartigen Prozessen kann ein im flüssigen Medium suspendierter Feststoff, beispielsweise ein Suspensionskatalysator oder ein sich auflösendes Edukt, anwesend sein, oder es können sich im flüssigen Medium unlösliche Reaktionsprodukte bilden. Bei einem der Reaktionspartner kann es sich auch um einen gasförmig dem Reaktor zugeführten Stoff handeln. Das Verfahren eignet sich in besonderer Weise für solche Reaktionen, in welchen ein Feststoff, der niedermolekular oder hochmolekular sein kann, gebildet wird, oder in welchem ein suspendierter Katalysator kontinuierlich aus dem Reaktor ausgeschleust und nach Regenerierung diesem wieder zugeführt wird.

Bei dem flüssigen Medium handelt es sich um eine Lösung in Wasser, einem wäßrig-organischen oder rein organischen Lösungsmittel. Aufgrund der Gasinjektion und damit Beladung des Gases mit Lösungsmitteldampf und gegebenenfalls dem Erfordernis, diesen zurückzugewinnen, werden im wesentlichen ausreichend hochsiedende organische Lösungsmittelsysteme oder solche Lösungsmittel enthaltende wäßrig-organische Systeme oder Wasser eingesetzt, wobei Wasser besonders bevorzugt wird.

Die Stoffumwandlung kann bei beliebiger Temperatur erfolgen; im allgemeinen werden Temperaturen von etwa -10 °C bis 150 °C bevorzugt. Bei Wasser als Lösungsmittel des flüssigen Mediums liegt die Temperatur zweckmäßigerweise zwischen dem Gefrierpunkt und 100 °C.

Auch der Druck kann bei der Stoffumwandlung in weiten Grenzen - Unterdruck, Normaldruck und Überdruck - liegen. Unter Verwendung eines als Vakuumbehälter ausgebildeten Reaktors lassen sich Stoffumwandlungen unter vermindertem Druck, etwa unter Bedingungen einer Verdampfungskühlung, durchführen.

Gefunden wurde auch eine Vorrichtung zur Durchführung des erfindungsgemäßen Verfahrens, welche einen Auftriebsfreistrahlreaktor umfaßt, der einen sich im unteren Teil verjüngenden Behälter mit einer Vorrichtung zur Gasinjektion in einer eine Auftriebsfreistrahlumwälzung ermöglichenden Positionierung umfaßt, welche dadurch gekennzeichnet ist, daß der Reaktor im wesentlichen frei von Einbauten ist und am sich verjüngenden unteren Teil einen Stutzen zur Abnahme einer feststoffreichen Suspension und oberhalb der Vorrichtung zur Gasinjektion ein Einleitungsrohr zum Zuführen eines flüssigen Mediums enthält, wobei sich die Auslaßöffnung des Einleitungsrohres im Bereich des sich im Betriebszustand ausbildenden Blasenschleiers befindet.

Der zu verwendende Reaktor ist als Auftriebsfreistrahlreaktor ausgebildet, der durch eine punkt- oder linienförmige Gasinjektion eine großräumige Umwälzung des Reaktorinhalts erlaubt. Um eine ungestörte Großraumzirkulation zu erzielen, ist der Reaktor im wesentlichen frei von Einbauten, wie Leitblechen, Rührer und dergleichen. Innerhalb des Reaktors können jedoch ein oder mehrere Zuleitungsrohre zum Zuführen von Edukten angeordnet sein; derartige Zuleitungsrohre können an beliebiger Stelle im Reaktor enden, vorzugsweise enden sie aber im Bereich des sich im Betriebszustand ausbildenden Blasenschleiers oberhalb der Gasinjektionsvorrichtung oder in der Nähe der Flüssigkeitsoberfläche, jedoch innerhalb der Flüssigkeit.

Durch einen sich verjüngenden unteren Teil wird die Umwälzung begünstigt, und zudem kommt es bei Suspensionen zur Ausbildung eines Suspensionstrennschnitts und einer Klassierung der Feststoffpartikel. Vorzugsweise umfaßt der Reaktor ein zylinderförmiges Oberteil und ein konisch ausgebildetes Unterteil, wobei das konische Unterteil gemäß einer bevorzugten Ausführungsform des Verfahrens so bemessen ist, daß es mindestens die Hälfte des umzuwälzenden Flüssigkeitsvolumens aufnimmt. Der Reaktor kann auch rechteckig sein und ein quaderförmiges Oberteil und ein keilförmiges, d.h. spitz zulaufendes Unterteil aufweisen. Der Öffnungswinkel des Konus oder spitz zulaufenden Unterteils liegt im allgemeinen zwischen 45° und 150°, insbesondere zwischen 60° und 120°. Zum Abführen einer feststoffreichen Suspension wird am konischen oder keilförmigen Unterteil ein Stutzen angeordnet.

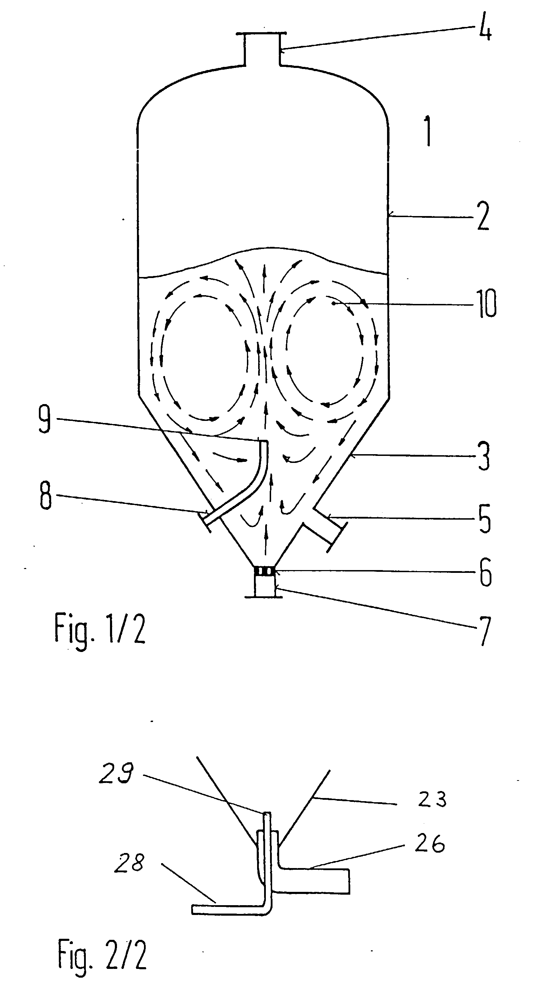

Figur 1 zeigt einen bevorzugten Auftriebsfreistrahlreaktor in schematischer Form im Längsschnitt, Figur 2 eine spezielle Ausführungsform des Unterteils eines derartigen Reaktors, gleichfalls im Längsschnitt.

Ein Auftriebsfreistrahlreaktor (1) gemäß Figur 1 stellt eine bevorzugte Ausführungsform einer Vorrichtung zur Durchführung des erfindungsgemäßen Verfahrens dar. Der Behälter umfaßt einen zylinderförmigen oberen Teil (2) und einen konusförmigen unteren Teil (3). Der Behälterdeckel enthält einen Stutzen (4) zum Abzug der Brüden und Anschluß an ein Vakuumsystem (nicht gezeigt). An der Konuswand ist ein Stutzen (5) zum Abzug einer Suspension angeordnet; die Höhe der Positionierung dieses Stutzens liegt zweckmäßigerweise unterhalb des sich im Betriebszustand einstellenden Suspensionstrennschnitts. An der Konusspitze befindet sich eine Vorrichtung zur Gasinjektion (6), beispielsweise eine Lochplatte. Das Gas wird durch einen Stutzen (7) zugeführt und gelangt durch die Vorrichtung zur Gasinjektion in den Reaktor. Der Reaktor ist im wesentlichen frei von Einbauten: In der Ausführungsform gemäß Figur 1 ist ausschließlich ein Rohr (8), das der Zufuhr flüssiger Einsatzstoffe dient und dessen Auslaßöffnung (9) sich im Bereich des im Betriebszustand gebildeten Blasenschleiers befindet, innerhalb des Reaktors. Im Betriebszustand, d.h. Einblasen von Gas oder vorzugsweise Einsaugen des Gases unter vermindertem Druck, bildet sich in der im Reaktor befindlichen Lösung oder Suspension (10) eine großräumige Zirkulationsströmung aus, deren Richtung mit den Pfeilen gekennzeichnet ist.

In der Ausführungsform der Figur 2 befindet sich an der Spitze des konusförmigen Unterteils (23) des Reaktors eine rohrförmige Vorrichtung (26) zur Gasinjektion. Das Gas tritt aus dem von dieser Vorrichtung und einem diese zentral durchdringenden Einleitungsrohr (28) gebildeten Ringspalt in den Reaktor. Die Austrittsöffnung (29) des Einleitungsrohr kann durch Verschieben des Rohres (28) verändert werden, damit läßt sich die Lage des Suspensionstrennschnitts bei Prozessen, an welchen suspendierte Feststoffpartikel beteiligt sind, verändern.

Das erfindungsgemäße Verfahren eignet sich in besonderer Weise für Prozesse, in deren Verlauf ein Produkt aus dem flüssigen Medium auskristallisiert oder auf andere Weise, etwa durch Polymerisation, wachsenden Partikel entstehen. Beispiele zur Verwendung des Verfahrens sind die Herstellung von Aktivsauerstoffverbindungen, etwa H₂O₂-Folgeprodukte aus der Reihe Natriumpercarbonat, Natriumperborat-tetrahydrat, Persulfate, darunter auch das Tripelsalz 2 KHSO₅ · KHSO₄ · K₂SO₄, Formamidinsulfinsäure. Bei der in-situ Herstellung und Kristallisation werden dem mit Mutterlauge befüllten Reaktor sowohl eine wäßrige H₂O₂-Lösung als auch die weiteren erforderlichen Reaktionspartner, also Soda, Natriummetaborat, Caro*'*sche Säure und KOH beziehungsweise Thioharnstoff in jeweils gelöster Form getrennt vom H₂O₂ oder bereits damit gemischt zugeführt; gleichzeitig wird Suspension abgezogen; nach Abtrennung der Kristalle aus der Suspension wird die Mutterlauge mit einem oder mehreren Reaktionspartnern aufgestockt und in dieser Form rezykliert. Das Verfahren eignet sich auch gut zur Durchführung der Kristallisation von Aminosäuren.

Es wird angenommen, daß sich im Auftriebsfreistrahlreaktor drei hydraulisch getrennte Bereiche ausbilden, deren Wirkung auf die Kristallisation wie folgt interpretiert wird:
(i) Auftriebsbereich im Blasenschleier: Hier werden die Reaktanden mit den Vorteilen eingeleitet, daß die axiale Bündelung der Stromlinien die Übersättigung der Lösung aufrechterhält und die Reaktions- und Kristallisationswärme durch Vakuumkühlung schnell zur Oberfläche abgeführt wird. Als besonders vorteilhaft hat sich erwiesen, die Edukte möglichst tief, also dicht oberhalb des sich ausbildenden Suspensionsschnitts, einzuleiten, damit die übersättigte Lösung eine hohe Suspensionsdichte von vorzugsweise gröberen Partikeln vorfindet.
(ii) Abtriebsbereich im Außenraum: Durch die Großraumzirkulation erfolgt eine Querstromklassierung. Feine Partikel werden im oberen Bereich in den Blasenschleier eingezogen; größer werdende Partikel wandern auf zunehmend längeren Bahnen in Richtung Spitze des sich verjüngenden, vorzugsweise konischen oder keilförmigen Reaktorunterteils.
(iii) Trennschnitt der Suspensionsdichte im sich verjüngenden (konischen) Unterteil: Der zur Konusspitze abnehmende Auftriebsstrom begrenzt die hydraulische Förderung an Partikeln. Dadurch bildet sich mit zunehmender Partikelgröße und -anzahl in Höhe des hydraulischen Gleichgewichts ein Trennschnitt der Suspensionsdichte aus. Somit kann im Behältersumpf eine hochkonzentrierte, also feststoffreiche, Suspension abgezogen werden, ohne daß es zu Ablagerungen kommt.

Bekanntlich ist die sekundäre Keimbildung eine der wichtigsten Einflußgrößen auf die Kornverteilung eines Kristallisats. Während bei vorbekannten Verfahren unter Verwendung von Kristallisatoren mit unterschiedlich konstruierten Einbauten und Rührern und/oder Pumpen als Umwälzorgan die schlechte Kornzahlkontrolle mittels chemischer und/oder aufwendiger apparativer Maßnahmen zu verbessern versucht wird, zeigt das erfindungsgemäße Verfahren bei der Kristallisation unerwartete Vorteile:
* Einfacher Reaktor, im wesentlichen ohne Einbauten;
* einfache Steuerung der Umwälzung;
* keine Kornzerstörung durch rotierende Aggregate oder Umlenkung an scharfen Einbaukanten;
* einfache Verweilzeiteinstellung zur Erzielung eines bestimmten Korngrößenspektrums;
* einstellbare Klassierung;
* keine zusätzlichen Apparate und Verfahrensschritte zur Abtrennung und Wiederauflösung von Feinkorn.

Ein besonderer, völlig unerwarteter Vorteil des erfindungsgemäßen Verfahrens ist das veränderte Schaumbildungsverhalten. Systeme, welche in der Regel eine starke Neigung zum Schäumen haben, lassen sich im erfindungsgemäßen Verfahren ohne jeden Entschäumungszusatz handhaben und machen auch mechanische Einrichtungen zur Schaumzerstörung überflüssig. Es wird angenommen, daß mehrere Effekte zu diesem veränderten Schaumbildungsverhalten beitragen:
(i) In Abhängigkeit von den Gasinjektionsbedingungen (Druck, Düsengröße, Temperatur) ist es leicht möglich, große Primärblasen zu erhalten, die bei der Schaumbildung platzen; bevorzugt erfolgt die Gasinjektion mittels einer Düse mit großer Düsenöffnung (Durchmesser im 1 bis 10 mm-Bereich) und unter vermindertem Druck (Ansaugen). (ii) Durch den Auftriebsblasenschleier wird für die Verdunstung, bei der keine Dampfblasen entstehen, eine große zusätzliche Oberfläche hergestellt. (iii) Siedeblasen, die an den Partikeln entstehen, können bei der Auftriebsfreistrahl-Umwälzung bereits sehr tief im Reaktor in den Gasraum des Blasenschleiers diffundieren und so als große Blasen nicht mehr oder in geringerem Umfang zur Schaumbildung beitragen; im Blasenschleier treten hohe Scherkräfte auf, die die Bläschenablösung bewirken. (iv) Der im Reaktor zirkulierende sehr große Flüssigkeitsstrom wird an der Oberfläche aus der Kernströmung schlagartig zum Außenraum umgebrochen, so daß es zu einer mechanischen Schaumzerstörung und/oder zur Verhinderung einer Schaumbildung im Entstehungsprozeß kommt.

Die erfindungsgemäße Vorrichtung zeichnet sich durch eine besonders einfache Bauart bei gleichzeitig hoher Effizienz sowohl bezüglich der Minderung der Neigung zur Schaumbildung oder Zerstörung von Schaum als auch bezüglich der Klassierung von im flüssigen Medium suspendierten Partikeln aus. Zudem treten wegen der Abwesenheit von Einbauten, ausgenommen ein oder mehrere Einleitrohre, praktisch keine Verkrustungsprobleme auf.

Die nachfolgenden Beispiele und Vergleichsbeispiele verdeutlichen die Erfindung.

### Vergleichsbeispiel 1: Herstellung von Natriumpercarbonat

### a) Diskontinuierliche Kristallisation

Der als Vakuumbehälter ausgebildete Kristallisationsreaktor bestand aus Glas und wies einen Klöpperboden auf. Die Umwälzung erfolgte mittels eines Rührers. Die Kristallisationszeit betrug 60 min, die Temperatur 15 °C, der Druck 16 mbar abs.

Vorgelegt wurde eine synthetische Mutterlauge aus 45 kg Wasser, 10 kg NaCl, 2,23 kg Soda, 1,18 l H₂O₂ (70 Gew.-%), 10 g NaHMP (Natriumhexametaphosphat), 50 ml Wasserglas.

Die Mutterlauge wurde aufgestockt mit 5,03 kg Soda und 30 g NaHMP (= aufgestockte Mutterlauge). Zudosiert wurden 2,92 l einer wäßrigen H₂O₂-Lösung (70 Gew.-%).

Versuch 1: Einsatz der synthetischen Mutterlauge; die mit Soda aufgestockte Mutterlauge wurde vor der H₂O₂-Zugabe filtriert. Nach der Kristallisation wurde Natriumpercarbonat von der Mutterlauge abgetrennt und getrocknet; sein Aktivsauerstoffgehalt (Oa) betrug 13,9 %, der Feinanteil (< 0,2 mm) 2 %.

Versuch 2: Einsatz der filtrierten Mutterlauge aus Versuch 1, die aufgestockte Mutterlauge wurde filtriert. Die Analysendaten lauteten: Oa = 14,4 %, Feinanteil (< 0,2 mm) = 14 %.

Versuch 3: Einsatz der synthetischen Mutterlauge; die aufgestockte Mutterlauge wurde im Gegensatz zu Versuch 1 nicht filtriert. Die Analysendaten lauteten: Oa = 14,4 %, Feinanteil (< 0,2 mm) 14 %.

Versuch 4: Einsatz einer unfiltrierten Mutterlauge aus Versuch 3, keine Filtration der aufgestockten Mutterlauge. Die Analysendaten lauteten: Oa = 14,4 %; Feinanteil (< 0,2 mm) = 24 %.

In den Versuchen 1 bis 4 bildete sich in Abwesenheit eines Entschäumers eine hohe Schaumschicht. Zudem war der Feinanteil stets sehr hoch.

### b) Kontinuierliche Kristallisation

Der Kristallisationsreaktor entsprach jenem der Versuche 1 bis 4, er war jedoch mit Vorrichtungen zur kontinuierlichen Zudosierung von aufgestockter Mutterlauge und der H₂O₂-Lösung sowie zum kontinuierlichen Abnehmen der Suspension ausgestattet. Vorgelegt wurde zunächst eine synthetische Mutterlauge, deren Zusammensetzung und Menge Vergleichsbeispiel 1 entsprach. Nach Aufstocken derselben mit 5,03 kg Soda und 30 g NaHMP wurde wäßrige 70 gew.-%ige H₂O₂-Lösung (Molverhältnis Soda zu H₂O₂ = 1 : 1,5) bei 15 °C, einem Druck von 16 mbar abs. innerhalb 1 Stunde unter Rühren zudosiert.

Versuch 5: Die während der Kristallisation ausgetragene Suspension wurde vom auskristallisierten Natriumpercarbonat befreit; die dabei erhaltene Mutterlauge wurde unter Beibehaltung des Mengenverhältnisses Mutterlauge zu Soda und NaHMP aufgestockt und vor der Rückführung in den Kristaller filtriert. Der Oa-Gehalt des Natriumpercarbonats betrug 14,4 %, der Feinanteil (< 0,2 mm) 9 %.

Versuch 6: Sofern die aufgestockte Mutterlauge unfiltriert in den Kristaller zurückgeführt wurde, stieg der Feinanteil auf 20 bis 40 % an.

Bei der kontinuierlichen Kristallisation trat starke Schaumbildung auf, so daß zur Aufrechterhaltung des benötigten Vakuums ein Entschäumer zudosiert werden mußte. Als am besten geeignet erwies sich Tri-n-butylphosphat, das in den Versuchen 5 und 6 in einer Menge von 0,2 ml pro Liter Suspension eingesetzt wurde.

### Beispiel 1: Herstellung von Natriumpercarbonat

Kontinuierliche Kristallisation im Vakuum in einem Kristaller aus Glas mit einem Konus im unteren Teil des Kristallers. Die Umwälzung erfolgte mittels Luftinjektion. Die Luft wurde an der Spitze des Konus eingeführt. Im unteren Teil der Konuswand befand sich ein Stutzen zur Abnahme der Suspension. Wäßrige H₂O₂-Lösung (60 gew.-%ig) und mit Soda und NaHMP aufgestockte Mutterlauge wurden kontinuierlich im Molverhältnis H₂O₂ zu Soda von 1,5 zudosiert. Die Zufuhrleitungen endeten unterhalb der Flüssigkeitsoberfläche. Injektionsluft: 365 Nl/h; mittlere Verweilzeit ca. 1 h, Temperatur 25 °C, Druck 44 mbar abs. Dosierung an aufgestockter Mutterlauge: 14,7 kg/h (Zusammensetzung: 9,94 kg Wasser, 2,3 kg NaCl, 2,38 kg Soda, 14,9 g NaHMP, 40 ml Wasserglas).

Versuch 1: Die Mutterlauge wurde nach Filtration (Nutsche) aufgestockt und unfiltriert zum Kristaller dosiert. Nach fünfmaliger Rückführung der gesamten Menge Mutterlauge betrugen die Stoffdaten des Natriumpercarbonats: Oa = 14,36 %; Feinanteil (< 0,2 mm) = 1,9 %; Dp₅₀ = 1,35 mm.

Versuch 2: Die Mutterlauge wurde ohne Filtration aufgestockt und unfiltriert dem Kristaller zudosiert. Nach fünfmaliger Rückführung der Mutterlauge betrugen die Stoffdaten des Natriumpercarbonats: Oa = 14,25 %; Feinanteil (< 0,2 mm) = 0,6 %; Dp₅₀ = 1,23 mm.

Es traten bei den kontinuierlichen Kristallisationsversuchen nach dem erfindungsgemäßen Prinzip keine Schaumprobleme auf; eine ca. 10 cm hohe Schaumschicht blieb während der Versuche stabil. Ein Entschäumer wurde nicht zugegeben. Das Produkt ist durch einen niedrigen Feinanteil gekennzeichnet.

### Beispiel 2: Herstellung von Formamidinsulfinsäure (FAS)

Kontinuierliche Kristallisation im Vakuum in einem Kristaller aus Glas mit einem konusförmig ausgebildeten unteren Teil des Kristallers. Die Umwälzung erfolgte mittels Luftinjektion - an der Konusspitze von unten eingeführt. Zuleitungen und Abnahmestutzen gemäß Beispiel 1. Injektionsluft: 40 Nl/h; Verweilzeit ca. 2,5 h, Temperatur 6,5 °C; Druck 10 mbar abs.

Vorgelegt wurde gesättigte FAS-Lösung bei 20 °C; Thioharnstofflösung (35 Gew.-%, 55 °C) wurde zum Kristaller dosiert; zusätzlich wurde eine wäßrige H₂O₂-Lösung (35 Gew.-%) so zudosiert, daß das Molverhältnis H₂O₂ zu Thioharnstoff 2,01 betrug.

Die aus der abgezogenen Suspension isolierte FAS zeigte folgende Stoffdaten: Dp₅₀ = 0,23 mm; FAS-Gehalt = 98,7 %; TH-Gehalt = < 0,1 %.

Während der kontinuierlichen Kristallisation blieb die Schaummenge konstant und die Menge vergrößerte sich gegenüber einer zu Beginn entstandenen geringen Schaummenge nicht.

### Beispiel 3: Kristallisation von Thioharnstoff (TH)

Kontinuierliche Kristallisation im Vakuum in einem Kristaller aus Glas mit einem Konus im unteren Teil des Kristallers (Kristaller gemäß den Beispielen 1 und 2). Die Zuleitung für die TH-Lösung endete unterhalb der Flüssigkeitsoberfläche im Bereich des sich beruhigenden Blasenschleiers. Ein Stutzen zur Abnahme der feststoffreichen Suspension befand sich am unteren Teil der Konuswand. Die Umwälzung erfolgte mittels Luftinjektion in einer Menge von 60 Nl/h. Verweilzeit ca. 1,8 h; Temperatur 26,5 °C; Druck 40 mbar abs. Vorlage: Gesättigte TH-Lösung bei 20 °C, ca. 12 kg; Thioharnstofflösung (35 Gew.-%, 70 °C) wurde in einer Menge von 7,5 kg/h unfiltriert zum Kristaller dosiert.

Erhalten wurde Thioharnstoff mit einem mittleren Korndurchmesser von Dp₅₀ = 0,43 mm. Anders als bei konventioneller Kristallisation trat überraschenderweise weder Schaumbildung auf noch gab es Verkrustungen an der Kristallerwand.

## Patentansprüche

1. Verfahren zur Minderung oder Vermeidung einer Schaumbildung bei chemischen und physikalischen Stoffumwandlungsprozessen in einem flüssigen Medium, wobei die Stoffumwandlung in einem behälterförmigen Reaktor unter Durchmischung des Reaktorinhalts durchgeführt wird,
dadurch gekennzeichnet,
daß man als Reaktor einen im wesentlichen von Einbauten freien, sich im unteren Teil verjüngenden und mit einer Vorrichtung zur Gasinjektion in einer eine Auftriebsfreistrahlumwälzung ermöglichenden Positionierung ausgestatteten Auftriebsfreistrahlreaktor verwendet und die Durchmischung des Reaktorinhalts durch Gasinjektion bewirkt.

2. Verfahren nach Anspruch 1,
dadurch gekennzeichnet,
daß man einen Auftriebsfreistrahlreaktor verwendet, der ein zylinderförmiges Oberteil und ein konisch ausgebildetes Unterteil oder ein quaderförmiges Oberteil und ein keilförmig ausgebildetes Unterteil, ein Rohr zum Zuführen eines flüssigen Stoffes in den Bereich des im Betriebszustand gebildeten Blasenschleiers und einen am konisch oder keilförmig ausgebildeten Unterteil angeordneten Stutzen zum Abführen einer feststoffreichen Suspension umfaßt.

3. Verfahren nach Anspruch 1 oder 2,
dadurch gekennzeichnet,
daß man einen als Vakuumbehälter ausgebildeten Auftriebsfreistrahlreaktor verwendet.

4. Verfahren nach einem der Ansprüche 1 bis 3,
dadurch gekennzeichnet,
daß es sich bei der Stoffumwandlung um eine Kristallisation handelt, wobei dem Auftriebsfreistrahlreaktor kontinuierlich oder periodisch eine Lösung der zu kristallisierenden Verbindung oder Lösungen von Rohstoffen zur in situ Bildung einer Lösung der zu kristallisierenden Verbindung zuführt, wobei die genannten Lösungen übersättigt sind oder eine Übersättigung durch Verdunstungskühlung erzielt wird, und eine feststoffreiche Suspension durch einen an der Wand des unteren Teils des Reaktors angeordneten Stutzen abzieht.

5. Verfahren nach einem der Ansprüche 1 bis 3,
dadurch gekennzeichnet,
daß es sich bei der Stoffumwandlung um eine katalytische Reaktion unter Bildung eines im flüssigen Medium unlöslichen Polymeren handelt, wobei man dem Auftriebsfreistrahlreaktor ein oder mehrere Monomere und Katalysator zuführt und eine an unlöslichen Polymeren reiche Suspension durch einen an der Wand des unteren Teils des Reaktors angeordneten Stutzen abzieht.

6. Verfahren nach einem der Ansprüche 1 bis 3,
dadurch gekennzeichnet,
daß es sich bei der Stoffumwandlung um eine katalytische Reaktion in Gegenwart eines kontinuierlich zu regenerierenden Suspensionskatalysators handelt, wobei man dem Auftriebsfreistrahlreaktor kontinuierlich oder periodisch eine oder mehrere die umzusetzenden Verbindungen enthaltenden Lösungen zuführt und eine an Suspensionskatalysator reiche Phase durch einen an der Wand des unteren Teils des Reaktors angeordneten Stutzen abzieht und den Katalysator nach Regeneration dem Reaktor wieder zuführt.

7. Verfahren nach einem der Ansprüche 1 bis 4,
dadurch gekennzeichnet,
daß es sich bei der Stoffumwandlung um die Herstellung eines Wasserstoffperoxid-Folgeprodukts aus der Reihe Natriumperborat, Natriumpercarbonat und Formamidinsulfinsäure handelt, wobei man dem mit einer gesättigten Lösung des herzustellenden H₂O₂-Folgeproduktes befüllten Auftriebsfreistrahlreaktor eine wäßrige Wasserstoffperoxidlösung und eine Lösung enthaltend einen Stoff aus der Reihe Natriummetaborat, Natriumcarbonat und Thioharnstoff in mindestens stöchiometrisch erforderlichem Verhältnis zuführt und eine feststoffreiche Suspension durch einen an der Wand des unteren Teil des Reaktors angeordneten Stutzen abzieht.

8. Vorrichtung zur Durchführung eines Verfahrens gemäß einem der Ansprüche 1 bis 5, umfassend einen Auftriebsfreistrahlreaktor (1), der einen sich im unteren Teil (3, 23) verjüngenden Behälter mit einer Vorrichtung zur Gasinjektion (6, 26) in einer eine Auftriebsfreistrahlumwälzung ermöglichenden Positionierung umfaßt,
dadurch gekennzeichnet,
daß der Reaktor im wesentlichen frei von Einbauten ist und am sich verjüngenden unteren Teil einen Stutzen (5) zur Abnahme einer feststoffreichen Suspension und oberhalb der Vorrichtung zur Gasinjektion ein Einleitungsrohr (8, 28) zum Zuführen eines flüssigen Mediums enthält, wobei sich die Auslaßöffnung (9, 29) des Einleitungsrohres im Bereich des sich im Betriebszustand ausbildenden Blasenschleiers befindet.

9. Auftriebsfreistrahlreaktor nach Anspruch 8,
dadurch gekennzeichnet,
daß er als Vakuumbehälter ausgebildet ist.

## Claims

1. A process for reducing or avoiding foam production during chemical and physical materials conversion processes in a liquid medium, wherein the materials conversion is performed in a hopper-shaped reactor with thorough mixing of the contents of the reactor,
characterised in that
an ascending jet reactor which is substantially free of baffles, tapering in the lower section and provided with a device for gas injection in a position which enables ascending jet circulation, is used as a reactor and thorough mixing of the contents of the reactor is achieved by gas injection.

2. A process according to Claim 1,
characterised in that
an ascending jet reactor is used which consists of a cylindrical upper section and a conical lower section or a cuboid upper section and a wedge-shaped lower section, a pipe for introducing a liquid substance in the region of the stream of bubbles produced in the operating state and a port located in the conical or wedge-shaped lower section for withdrawing a solids-rich suspension.

3. A process according to Claim 1 or 2,
characterised in that
an ascending jet reactor designed as a vacuum container is used.

4. A process according to one of Claims 1 to 3,
characterised in that
the materials conversion process is a crystallisation process, wherein a solution of the compound to be crystallised or solutions of raw materials for the in-situ formation of a solution of the compound to be crystallised is/are introduced continuously or periodically to the ascending jet reactor, wherein the said solutions are supersaturated or supersaturation is produced by vaporisation cooling, and a solids-rich suspension is withdrawn through a port located in the wall of the lower section of the reactor.

5. A process according to one of Claims 1 to 3,
characterised in that
the materials conversion process is a catalytic reaction involving the formation of a polymer which is insoluble in the liquid medium, wherein one or more monomers and catalyst are introduced to the ascending jet reactor and a suspension rich in insoluble polymer is withdrawn through a port located in the wall of the lower section of the reactor.

6. A process according to one of Claims 1 to 3,
characterised in that
the materials conversion process is a catalytic reaction in the presence of a suspension catalyst which has to be continuously regenerated, wherein one or more solutions containing compounds to be reacted are introduced to the ascending jet reactor continuously or periodically and a phase rich in suspension catalyst is withdrawn through a port located in the wall of the lower section of the reactor and the catalyst is returned to the reactor after regeneration.

7. A process according to Claims 1 to 4,
characterised in that
the materials conversion process is the preparation of a hydrogen peroxide reaction product from the group comprising sodium perborate, sodium percarbonate and formamidinesulfinic acid, wherein an aqueous hydrogen peroxide solution and a solution containing a substance from the group comprising sodium metaborate, sodium carbonate and thiourea, in a ratio at least in accordance with the stoichiometric requirements, are introduced to the ascending jet reactor filled with a saturated solution of the H₂O₂ reaction product to be prepared and a solids-rich suspension is withdrawn through a port located in the wall of the lower section of the reactor.

8. A device for performing a process according to one of Claims 1 to 5, comprising an ascending jet reactor (1) which consists of a container (3, 23) with a tapering lower section and a device for gas injection (6, 26) in a position which enables ascending jet circulation,
characterised in that
the reactor is substantially free of baffles and contains a port (5) in the tapering lower section for accepting a solids-rich suspension and, above the device for gas injection, an inlet pipe (8, 28) for feeding a liquid medium, wherein the delivery opening (9, 29) of the inlet pipe is located in the region of the stream of bubbles being produced in the operating state.

9. An ascending jet reactor according to Claim 8,
characterised in that
it is designed as a vacuum container.

## Revendications

1. Procédé pour réduire ou empêcher la formation de mousse dans les processus chimiques et physiques de transformation de substances dans un milieu liquide, dans lequel on effectue la transformation d'une substance dans un réacteur en forme de récipient avec mélange du contenu du réacteur,
caractérisé en ce qu'
on utilise comme réacteur un réacteur avec courant ascendant libre essentiellement dépourvu de pièces insérées, se rétrécissant dans la partie inférieure et équipé d'un dispositif d'injection de gaz dans un positionnement permettant une circulation ascendante libre, et on produit le mélange du contenu du réacteur par une injection de gaz.

2. Procédé selon la revendication 1,
caractérisé en ce qu'
on utilise un réacteur à courant ascendant libre qui comprend une partie supérieure en forme de cylindre et une partie inférieure en forme de cône ou une partie supérieure parallélépipédique et une partie inférieure en forme de pyramide, un tube d'introduction d'un corps liquide dans la zone de trouble comportant des bulles produite à l'état de fonctionnement, et une tubulure disposée à la partie inférieure en forme de cône ou de pyramide pour prélever une suspension riche en solides.

3. Procédé selon la revendication 1 ou 2,
caractérisé en ce qu'
on utilise un réacteur à courant ascendant libre formé en forme de récipient sous vide.

4. Procédé selon l'une quelconque des revendications 1 à 3,
caractérisé en ce que,
pour ce qui est de la transformation de substances, il s'agit d'une cristallisation, opération dans laquelle on ajoute au réacteur à courant ascendant libre, de façon continue ou périodique, une solution du composé à cristalliser ou des solutions de matière premières pour la formation in situ d'une solution du composé à cristalliser, les solutions mentionnées étant sursaturées, ou bien une sursaturation étant produite par un refroidissement avec vaporisation, et l'on prélève une suspension riche en solides par une tubulure disposée sur la paroi de la partie inférieure du réacteur.

5. Procédé selon l'une des revendications 1 à 3,
caractérisé en ce que,
pour ce qui concerne la transformation de substances, il s'agit d'une réaction catalytique avec formation d'un polymère insoluble dans le milieu liquide, où l'on ajoute au réacteur à courant ascendant libre un ou plusieurs monomères et un catalyseur et l'on prélève une suspension riche en polymères insolubles par une tubulure disposée à la paroi de la partie inférieure du réacteur.

6. Procédé selon l'une des revendications 1 à 3,
caractérisé en ce que,
pour ce qui est de la transformation de substances, il s'agit d'une réaction catalytique en présence d'un catalyseur en suspension à régénérer de façon continue, opération dans laquelle on introduit dans le réacteur à courant ascendant libre, de façon continue ou périodique, une ou plusieurs solutions contenant les composés à faire réagir, et l'on prélève une phase riche en catalyseur en suspension par une tubulure disposée sur la paroi de la partie inférieure du réacteur, et on retire à nouveau le catalyseur du réacteur après régénération.

7. Procédé selon l'une des revendications 1 à 4,
caractérisé en ce que,
pour ce qui est de la transformation de substances, il s'agit de la production d'un dérivé de peroxyde d'hydrogène de la série perborate de sodium, percarbonate de sodium et acide formamidine sulfinique, où l'on ajoute au réacteur à courant ascendant libre rempli d'une solution saturée du dérivé d'H₂O₂ à produire, une solution aqueuse de peroxyde d'hydrogène et une solution contenant un corps de la série métaborate de sodium, carbonate de sodium et thiourée, dans le rapport au moins stoechiométrique nécessaire, et l'on prélève une suspension riche en solides par une tubulure disposée à la paroi de la partie inférieure du réacteur.

8. Dispositif pour réaliser un procédé selon l'une quelconque des revendications 1 à 5,
comprenant un réacteur à mouvement ascendant libre (1) constitué par un récipient se rétrécissant dans la partie inférieure (3, 23) avec un dispositif d'injection de gaz (6, 26) dans un positionnement permettant une circulation ascendante libre,
caractérisé en ce que
le réacteur est essentiellement dépourvu de dispositifs insérés et contient à la partie inférieure qui se rétrécit une tubulure (5) pour prélever une suspension riche en solides et au-dessus du dispositif d'injection de gaz une canalisation d'introduction (8, 28) pour l'apport d'un milieu liquide, l'ouverture de sortie (9, 29) de la canalisation d'introduction se trouvant dans la zone de trouble comportant des bulles qui se forme à l'état de fonctionnement.

9. Réacteur à courant ascendant libre selon la revendication 8,
caractérisé en ce qu'
il est formé en récipient sous vide.
